# EUROPEAN PATENT SPECIFICATION

(11) **EP 3 065 531 B1**
(45) Date of publication and mention of the grant of the patent: **24.10.2018**
(21) Application number: 13789771.6
(22) Date of filing: 08.11.2013
(51) Int. Cl.: A01G 3/025

(54) **LOPPER WITH ANGULAR ADJUSTMENT**
BAUMSCHERE MIT WINKELEINSTELLUNG
OUTIL D'ÉLAGAGE AVEC AJUSTEMENT ANGULAIRE

(43) Date of publication of application: 14.09.2016
(73) Proprietor: Husqvarna AB, 561 82 Huskvarna (SE)
(72) Inventor: KOHL, Peter, 89257 Illertissen (DE)
(74) Representative: Finkele, Rolf
(86) International application number: PCT/EP2013/073405
(87) International publication number: WO 2015/067319

(56) References cited:
- EP-A1- 2 319 295
- WO-A1-2013/091681
- DE-A1- 3 640 390
- GB-A- 2 474 965
- US-A- 5 317 806
- US-B2- 7 987 603
- US-B2- 8 220 163

## Description

### TECHNICAL FIELD

The present invention relates to a tool, and more particularly to a lopper with an angular adjustment.

### BACKGROUND

Tools with an angular adjustment, such as loppers, are well known in the art. Loppers with an angular adjustment typically include an implement, a transmission connected to the implement, a handle connected to a pivot joint, and an actuator connected to the implement. The implement includes at least one movable component and the actuator actuates the at least one movable component via the transmission. The transmission multiplies a force applied on the actuator by a user and transmit the multiplied force to the at least one movable component of the implement. Further, an angular orientation of the handle relative to the implement may also be adjusted about the pivot joint.

For example, U.S. Patent 8,220,163, issued on July 10, 2012 to Linden et al., discloses pruning shears including a cutting head with a spring loaded blade acting in cooperation with a counter blade. A drive mechanism including a transmission is connected to the cutting head, and an elongated handle connected to the drive mechanism. The transmission mechanism is integrated into the pivot joint at the rotating point about an axis, allowing the cutting head to be adjusted with respect to the elongated handle.

Further, EP published application No. 2,319,295 discloses a long reach pruner including a blade unit, a first connection device, a second connection device, and an adjust device to adjust the swing range of the blade unit. Further, a pulley transmission arrangement is positioned between the adjust device and a pull handle which is connected to a drive rod.

A pole pruner of DE 36 40 390 A1 describes a cutting arrangement attached to an elongated pole via a joint that allows the rotate the cutting arrangement about an axis perpendicular to the pole. The cutting arrangement consists of one fixed and one movable blade. The fixed blade is mounted to one side of the joint while the movable blade is connected to the other side of the joint via a pulley arrangement, with one pulley located at an extension arm of the movable blade and the other pulley fixed to the joint at the side opposite to the mount of the fixed blade. When actuation the cutting arrangement by pulling a line at the pole passing over the pulley arrangement this actuating force is multiplied by the pulley arrangement to generate a cutting force acting on the extension arm of the movable blade. The resultant counterforce is induced into joint via the fixed pulley. Further, WO 2013/091681 A1 discloses the subject-matter of the preamble of claim 1.

The above mentioned arrangements may cause significant stress on the pivot joint.

Therefore, in light of the foregoing, there is a need for an improved lopper with the angular adjustment.

### SUMMARY

In view of the above, it is an objective of the present invention to solve or at least reduce the problems discussed above. The objective is at least partially achieved according to a tool with an angular adjustment, in an embodiment of the present invention. The tool may be a pruning shear. The tool includes a handle, an implement, a joint disposed between the implement and the handle wherein the joint is configured to allow the implement and the handle to pivot relative to one another, and an actuator configured to actuate the at least one movable component of the implement. The tool further includes a transmission coupled with and located between the actuator and the at least one movable component, wherein the components of the transmission are configured to multiply an initial actuating force from the actuator to obtain a final actuating force. Further, the transmission is configured such that a multiplication factor applied to the initial actuating force by the components of the transmission located in a region of the tool, between but not including the joint and the at least one movable component of the implement, is greater than the multiplication factor resulting from the other components of the transmission.

In one embodiment the transmission, including a pulley arrangement and a lever, is located completely in the region between the joint and the at least one movable component of the implement. Since with this specific embodiment any component of the transmission is neither located within nor before the joint as seen from the actuator, stress generated at the joint is minimized. Thus, various components of the joint may be manufactured from a lightweight material as the joint have to undergo lower stress. Further, as the transmission is separate from various components of the joint, the transmission, and a housing of the transmission, may have a compact and lightweight design. The transmission might be incorporated in a housing which is of compact design to allow for a larger range of angular adjustment of the implement from about 0 to 180 degrees. Further, due to the housing of the transmission it may also not interfere with a cutting operation as the housing prevents the transmission mechanism to get tangled with branches and leaves. Therefore, overall ergonomics of the tool is improved.

According to an embodiment, the components of the transmission in the region, between but not including the joint and the at least one movable component of the implement are configured to apply the multiplication factor that is greater than 2 and preferably 7 to the initial actuating force.

According to an embodiment, the transmission is completely located between the joint and the at least one movable component of the implement such that the increase in the actuating force is wholly generated between the joint and the at least one movable component.

According to the invention, the tool further includes a housing in the region between the joint and the at least one movable component. The housing at least partly encloses the transmission.

According to an embodiment, the joint is provided at an interface of the housing and the handle. The joint is configured to pivotally connect the housing to the handle.

According to an embodiment, the implement is coupled to the housing such that the implement pivots with the housing relative to the handle.

According to the invention, the transmission includes a first pulley and a second pulley. The first pulley is located proximate to the joint and the second pulley is located proximate to the at least one movable component of the implement.

According to the invention, a lever connects the second pulley to the at least one movable component of the implement. The lever is pivotally connected to the at least one movable component of the implement.

According to an embodiment, the at least one movable component is a movable blade. The implement further includes a stationary blade being pivotally connected to the movable blade.

According to an embodiment, the stationary blade is fixedly coupled to the housing.

According to an embodiment, the movable blade is spring actuated to an open position relative to the stationary blade.

According to an embodiment, the final actuating force actuates the movable blade to move to a closed position relative to the stationary blade against the spring actuation.

According to an embodiment, the actuator includes a gripping member and a drive cable. The gripping member is configured to slide on the handle. The drive cable connects the gripping member to the transmission.

According to an embodiment, the drive cable is wound over the first pulley and the second pulley of the transmission.

According to an embodiment, the handle comprises a telescopic pole.

According to an embodiment, the tool is a pruning shear.

### BRIEF DESCRIPTION OF THE DRAWINGS

The invention will be described in more detail with reference to the enclosed drawings, wherein:
FIGS. **1** and **2** illustrate perspective views of a tool in exemplary angular configurations, according to an embodiment of the present invention;
FIG. **3** illustrates a perspective view of the tool without a telescopic pole, according to another embodiment of the present invention;
FIG. **4** illustrates an exploded view of the tool of FIG. **3****;**
FIG. **5** illustrates a cut up design of the tool of FIG. **3****;** and
FIG. **6** illustrates a perspective view of the tool at a different angular configuration relative to the embodiment of FIG. **5****.**

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention set forth in the appended claims. For example, one or more aspects of the present invention can be utilized in other embodiments and even other types of structures and/or methods. In the drawings, like numbers refer to like elements.

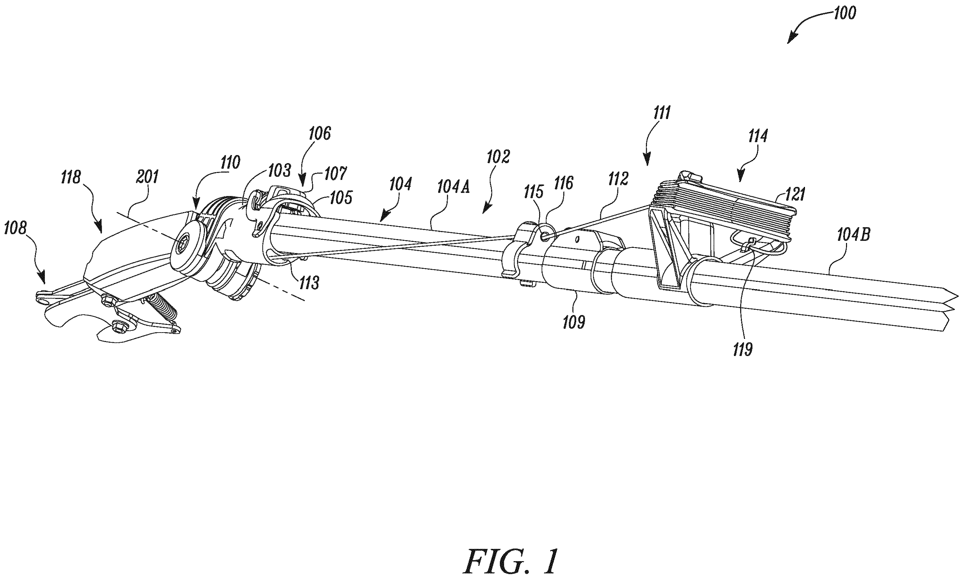

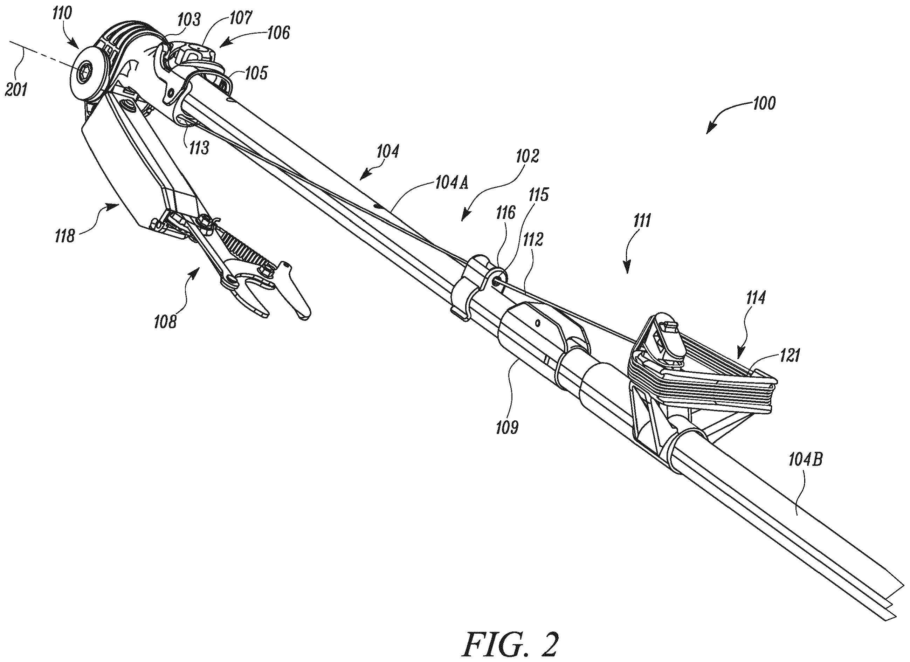

FIGS. **1** and **2** illustrate a perspective view of a tool **100** in two exemplary angular configurations, according to an embodiment of the present invention. The tool **100,** as illustrated in FIGS. **1** and **2** is a pruning shear. The tool **100** may be used for pruning branches of trees. However, the tool **100** may be any other type of manually actuated tool known in the art, for example, a lopper, secateurs, a plier, a gripper or manipulator etc.

The tool **100** includes a handle **102** having a short handle **103** and a telescopic pole **104.** The telescopic pole **104** may enable pruning of branches located at various heights from the ground. In an alternate embodiment (not shown), the handle **102** may include only the telescopic pole **104** for handling the tool **100.** In a further embodiment (not shown), the short handle **103** may not be coupled to the telescopic pole **104,** and the short handle **103** alone may be used for handling the tool **100.** The short handle **103** and the telescopic pole **104** may be detachably connected to each other by a male and female coupler (not shown), and then locked relative to each other by a locking mechanism **106.** The locking mechanism **106** may include a knob **107** that is connected to a screw (not shown). The knob **107** may be provided near one end of the telescopic pole **104.** The screw may be detachably coupled to a recess (not shown) of the short handle **103.** The locking mechanism **106** may further include a safety clasp **105** that is configured to prevent any inadvertent loosening of the knob **107** and/or unintentional detachment of the short handle **103** from the telescopic pole **104.** Further, the telescopic pole **104** may include a first tube **104A,** a second tube **104B,** and a coupler **109** that is configured to detachably connect the first tube **104A** to the second tube **104B.** In a locked configuration, the coupler **109** may telescopically lock the first tube and second tubes **104A, 104B** relative to each other. In an unlocked configuration, the coupler **109** may allow the first tube and second tubes **104A, 104B** to telescopically slide relative to each other. The first and second tubes **104A, 104B** are shown to be substantially cylindrical in FIGS. **1** and **2****.** However, the first and second tubes **104A, 104B** may be of any other cross-section, for example, elliptical, polygonal, or the like, within the scope of the present invention.

As shown in FIGS. **1** and **2****,** the tool **100** further includes an implement **108** and a joint **110.** The implement **108** may include at least one movable component (described later). The joint **110** may be disposed between the implement **108** and the short handle **103** which allows the implement **108** and the short handle **103** to pivot relative to one another about a pivot axis **201.** As shown in FIG. **1****,** the tool **100** may be at a first exemplary angular configuration wherein the implement **108** is oriented substantially parallel (approximately 0 degree) relative to the short handle **103.** As shown in FIG. **2****,** the tool **100** may be at a second angular configuration wherein the implement **108** is oriented at about 180 degrees relative to the short handle **103.** The two angular configurations of the tool **100,** as shown in FIGS. **1** and **2****,** may be two limiting angular configurations. Therefore, in various embodiments, the implement **108** may be oriented at various other angles, between about 0 to 180 degrees, relative to the short handle **103.** In other embodiments, the implement **108** may pivot between 0 to 360 degrees about the pivot axis **201.** In a further embodiment, the implement **108** may also pivot about the short handle **103** about an axis that is approximately perpendicular to the pivot axis **201.** The various angular orientations between the implement **108** and the short handle **103** may enable pruning of branches located at various angular positions.

Further, the tool **100** includes an actuator **111.** The actuator **111** includes a drive cable **112,** a gripping member **114** and a guiding member **116.** A first end **117** of the drive cable **112** may be attached to a fixation clip **119** (shown in FIG. **1**) of the gripping member **114.** The fixation clip **119** may enable detachable coupling between the first end **117** of the drive cable **112** and the gripping member **114.** Further, the guiding member **116** may include a hole **115** through which the drive cable **112** passes. The guiding member **116** may be slidably adjustable on the telescopic pole **104** such that the drive cable **112** may be supported at various positions. The guiding member **116** may provide support to the drive cable **112** from the gripping member **114** to the short handle **103** such that the drive cable **112** may not get displaced and get tangled on the branches. In an alternative embodiment, the guiding member **116** may not be present. The gripping member **114** is configured to move the drive cable **112** in order to transmit a force and actuate the implement **108.** The gripping member **114** may be slidably mounted on the telescopic pole **104.** In an embodiment, the gripping member **114** may be slid by the user to transmit an initial actuating force (shown later) to the implement **108** via the drive cable **112.** The drive cable **112** may be coupled to actuate the at least one movable component of the implement **108.** The drive cable **112** may pass through a channel **113** provided in the short handle **103.** The channel **113** may provide support and protection to the drive cable **112,** and at the same time allow the drive cable **112** to be connected to the implement **108.** The gripping member **114** may include a gripping portion **121** configured to be gripped by a user. The gripping portion **121** may be a D-shaped handle, a T-shaped handle, or the like. The drive cable **112** may also be partly coiled about the gripping member **114** in order to adjust an actuating length of the drive cable **112** as well as for storage purposes. The actuator **111,** as shown in FIGS. **1** and **2****,** is exemplary in nature, and other arrangements and/or designs may be possible. For example, in an alternate embodiment (not shown), the gripping member **114** may be provided at an end of the telescopic pole **104.** In various other embodiments (not shown), the gripping member **114** may also be provided adjacent to the telescopic pole **104** without any sliding support on the telescopic pole **104.** There may also be multiple gripping members (not shown) provided at different lengths along the telescopic pole **104.** Further, the drive cable **112** may pass inside the telescopic pole **104.** The gripping member **114** may also be of any other shape, for example, a tubular grip.

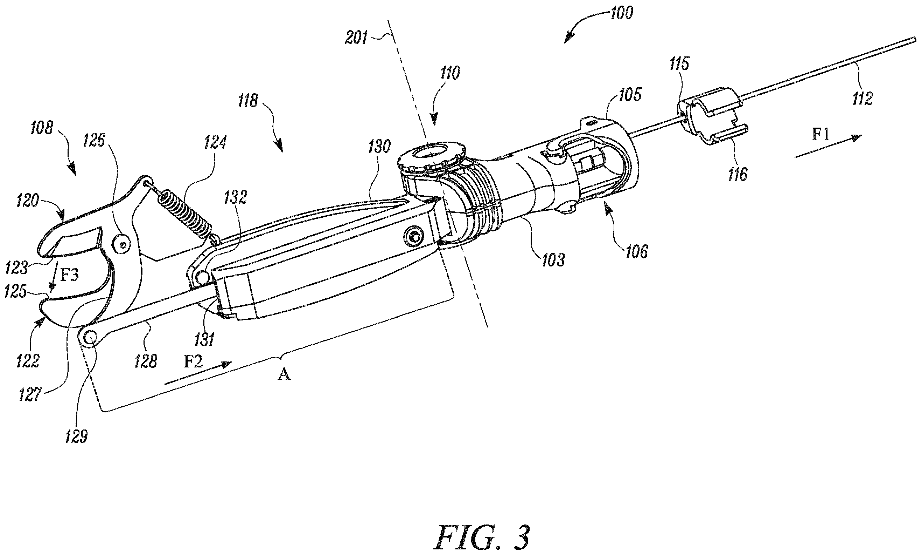

Further, the tool **100** includes a transmission **118.** The transmission **118** may be coupled with and located between the actuator **111** and the at least one movable component of the implement **108.** The components of the transmission **118** may be configured to multiply the initial actuating force from the actuator **111** to obtain a final actuating force (shown later) from the initial actuating force exerted on the drive cable by the gripping member **114.** The transmission **118** is configured to transmit the final actuating force (shown in FIGS. **3-5****)** to the at least one movable component of the implement **108.** A housing **130** may at least partly enclose the transmission **118.** The joint **110** is at an interface between the housing **130** and the short handle **103.** As illustrated in FIGS. **1** and **2****,** the housing **130** along with the transmission **118** and the implement **108** pivot about the pivot axis **201** relative to the short handle **103.** In an embodiment, some components of the transmission **118** may be located in a region **A** between, but not including, the joint **110** and the implement **108,** while other components may be located at other locations, for example, the joint **110,** within the short handle **103,** or the like. In an alternate embodiment, various components of the transmission **118** may be completely positioned in the region **A** between the joint **110** and the at least one movable component of the implement **108.** Details of the transmission **118** and the implement **108** will be described hereinafter.

FIG. **3** illustrates a detailed view of the tool **100** with the short handle **103** not coupled with the telescopic pole **104,** according to another embodiment of the present invention. As shown in FIG. **3****,** the implement **108** and the transmission **118** are oriented substantially parallel to the joint **110.** The implement **108** includes a movable blade **120** and a stationary blade **122.** The movable blade **120** and the stationary blade **122** may include cutting edges **123** and **125,** respectively. The cutting edges **123** and **125** may be sharpened in order to cut the branches. The movable blade **120** is embodied as the at least one movable component, as the tool **100** is a pruning shear. In various other embodiments of the tool **100,** the at least movable component may be a lopper blade, a plier blade, a gripping, a manipulating part, or the like. The movable blade **120** may be pivotally connected to the stationary blade **122** at a pivot point **126.** The movable blade **120** may be actuated by a spring **124** to an open position relative to the stationary blade **122.** The spring **124** may be coupled with the movable blade **120** at one end and the stationary blade **122** at the other end. A final cutting force **F3** may actuate the movable blade **120** to move to a closed position relative to the stationary blade **122** and against the biasing of the spring **124.** The spring **124** is embodied as a coil spring in FIG. **3****.** However, the spring **124** may be any other type of resilient member known in the art, for example, a volute spring, rubber members, or the like.

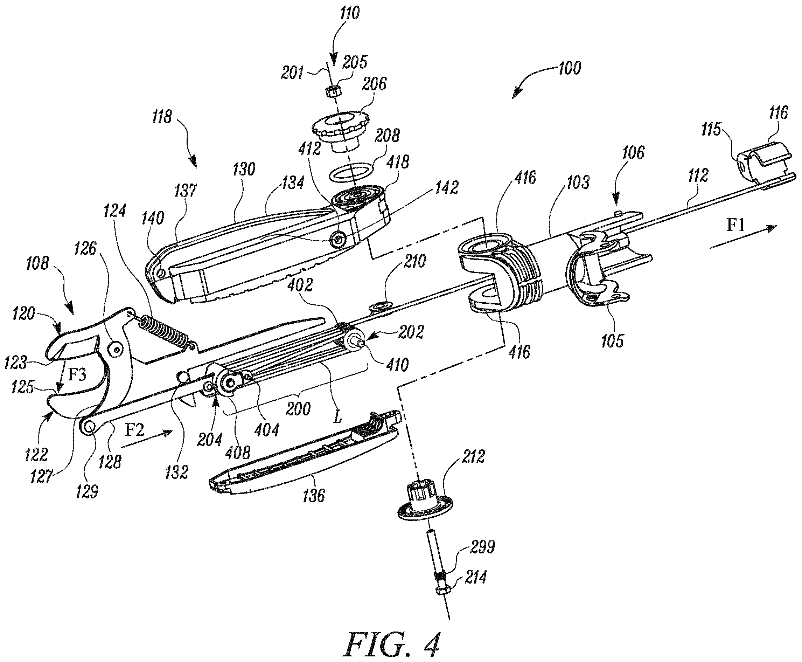

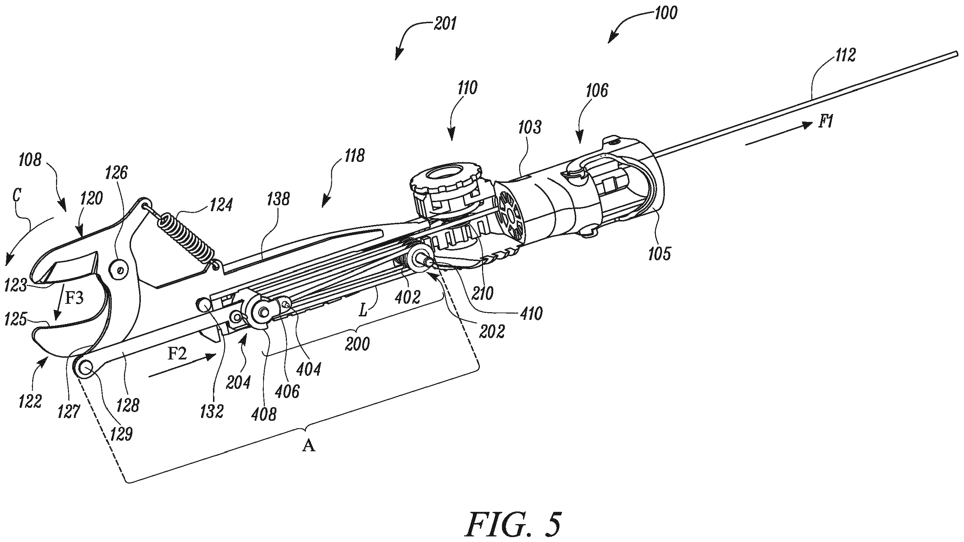

As shown in FIG. **3****,** the initial actuating force **F1** is exerted on the drive cable **112** by the gripping member **114** (shown in FIGS. **1** and **2**). The transmission **118** may multiply the initial actuating force **F1** to obtain the final actuating force **F2**. A curved portion **127** of the movable blade **120** may be pivotally coupled with a lever **128** at a pivot point **129.** The lever **128** transmits the final actuating force **F2** from the transmission **118** to the movable blade **120.** Further, the final actuating force **F2** may be multiplied due to the configuration of the movable blade **120** to obtain the final cutting force **F3** exerted by the movable blade **120.** Thus, the initial actuating force **F1** exerted on the drive cable **112** by a user is multiplied to the final cutting force **F3** which is finally used to cut a branch located between the cutting edges **123** and **125** of the movable blade **120** and the stationary bade **122,** respectively. The tool **100** further includes the housing **130** positioned in the region A between the joint **110** and the movable blade **120.** The lever **128** projects out of an opening **131** of the housing **130.** The stationary blade **122** may be fixedly coupled to the housing **130** by a fastener **132.** An elongate portion **138** (shown in FIGS. **4** and **5**) of the stationary blade **122** may also project inside the housing **130.** The joint **110** may be provided at the interface of the housing **130** and the short handle **103** such that the housing **130** may be pivotal relative to the short handle **103.** The stationary blade **122** and the movable blade **120** may also pivot along with the housing **130** since the stationary blade **122** is fixedly coupled to the housing **130,** and the movable blade **120** is coupled to the lever **128** and the stationary blade **122.** The various details of the movable blade **120** and the stationary blade **122,** as shown in FIG. **3****,** are purely exemplary in nature, and the movable blade **120** and the stationary blade **122** may be of any other design within the scope of the present invention. For example, the movable blade **120** may be envisioned without the curved portion **127** and the lever **128** may be coupled to the movable blade **120** proximate the pivot point **126.** The cutting edges **123** and **125** of the movable blade **120** and the stationary blade **122** may be serrated.

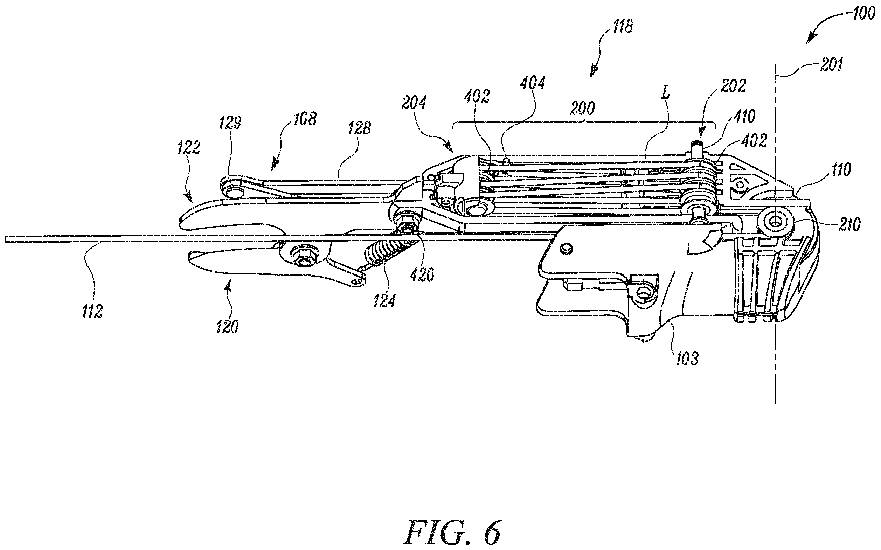

FIG. **4** illustrates an exploded view of the tool **100** of FIG. **3****.** The housing **130** at least partly encloses the transmission **118.** The housing **130** includes a first housing part **134** and a second housing part **136.** The first and second housings parts **134, 136** may be connected to each other by a snap-fit mechanism, one or more fasteners, adhesives, or the like. Alternatively, and outside of the scope of the invention, the housing **130** may be a single piece (not shown). The first housing part **134** includes a slot **137** such that the elongate portion **138** of the stationary blade **122** may be inserted into the first housing part **134.** Further, the fastener **132** couples the elongate portion **138** of the stationary blade **122** with apertures **140** located on both sides of the slot **137** of the first housing part **134.** In an embodiment, the fastener **132** may be a bolt fixed to a nut (shown in FIG. **6**).

According to the invention, as shown in FIG. **4****,** the transmission **118** is a pulley arrangement **200.** However, in other embodiments not covered by the invention, the transmission **118** may include a lever arrangement, a gear arrangement, a chain drive, a pneumatic arrangement, a hydraulic arrangement, or a combination thereof. The pulley arrangement **200** may be housed within a raised portion **142** of the first housing part **134.** The pulley arrangement **200** includes a first pulley **202** and a second pulley **204.** The first pulley **202** is positioned proximate to the joint **110** and the second pulley **204** is positioned proximate to the movable blade **120.** The first pulley **202** includes multiple grooves **402.** The second pulley **204** also includes multiple grooves (shown in FIG. **6**). The drive cable **112** is wound around the multiple grooves **402** of the first pulley **202** and the multiple grooves of the second pulley **204** with multiple lines **L** of the drive cable **112** extending between the first and second pulleys **202, 204.** A guide pulley **210** supports the drive cable **112** before the drive cable **112** is wound around the first and second pulleys **202, 204.** A second end **404** of the drive cable **112** is coupled to a cable connecting portion **406** of the second pulley **204.** Further, the second pulley **204** is coupled to the lever **128** via a lever connecting portion **408** of the second pulley **204.** In an embodiment, the first pulley **202** may be a fixed pulley which can only rotate about its axis. Further, the second pulley **204** is a movable pulley and imparts a linear motion to the lever **128.** The first pulley **202** includes protruding members **410** (one shown in FIG. **4**) that rotatably mounts the first pulley **202** to pulley apertures **412** (one shown in FIG. **4**) provided in the first housing part **134.**

As illustrated in FIG. **4****,** the joint **110** includes a dial **206,** a counter stopper **212** a pin **214,** a washer **208** and a nut **205.** The joint **110** also includes first sections **416** of the short handle **103.** The first sections **416** of the short handle **103** pivotally receive a second section **418** of the first housing part **134.** The pin **214** may pass through the dial **206,** the counter stopper **212,** the guide pulley **210,** and the first and second sections **416, 418.** The pin **214** may enable pivotal motion between the first sections **416** of the short handle **103** and the second section **418** of the first housing part **134.** The nut **205** and the pin **214** may also affix the various components of the joint **110** to each other. Further, the dial **206** and the counter stopper **212** may pass through corresponding openings (not shown) of first and second sections **416, 418** and engage with each other as well as with second section **418.** In an embodiment, the first section **416** and counter stopper **212** as well as pin **214** may include locking members (E.g., teeth) that normally engage with each other to prevent pivotal motion between the first sections **416** and the second section **418.** Force of spring **299** holds the locking members in contact with each other. However, displacement of the dial **206,** axially along the pivot axis **201** in an unlocking direction, reduces the effect of the force of spring **299** and allows for an eased pivotal motion between the first sections **416** and the second section **418.** Therefore, the first housing part **134,** and hence the housing **130** and the implement **108** may be pivotally adjusted relative to the short handle **103.** After adjustment, the dial **206** may be axially moved along the pivot axis **201** in a locking direction which is opposite to the unlocking direction. This causes the locking members on dial **206,** counter stopper **212** and first section **416** to engage with each other with increased force and thus pivotally lock the first housing part **134** relative to the short handle **103.** The various details of the joint **110,** as described above, are purely exemplary in nature, and any other mechanism that may allow selective angular adjustment between the housing **130** and the short handle **103** may be incorporated in the joint **110** without deviating from the scope of the present invention.

FIGS. **5** and **6** illustrate partial perspective views of the tool **100** in different angular configurations. Some components, such as a part of the housing **130** have been removed for illustrative purposes. As shown in FIG. **5**, the drive cable **112** passes through the channel **113** provided in the short handle **103** and then contacts the guide pulley **210.** Further, the guide pulley **210** is disposed in the joint **110** such that the guide pulley **210** rotates about the pivot axis **201.** As shown in FIG. **6****,** the guide pulley **210** supports the drive cable **112** in when the housing **130** and the implement **108** are oriented at about 180 degrees relative to the short handle **103.** Further, the fastener **132** along with the nut **420** secures the elongate portion **138** of the stationary blade **122** to the first housing part **134.** It may be apparent that the guide pulley **210** may not provide an increase in the initial actuating force **F1** exerted on the drive cable **112** by a user via the gripping member **114** (shown in FIGS. 1 and 2). Therefore, there may not be any force multiplication of the initial actuating force **F1** in the joint **110,** and the initial actuating force **F1** is transmitted to the pulley arrangement **200.** The inner diameter of the guide pulley **210** can be chosen to be very small, as the guide pulley **210** does not serve to increase forces. This again results in the positive effect that there is no significant influence on a change of the length of the drive cable during pivoting of the implement **108** and thus one will not observe significant change in opening between the movable blade **120** and the stationary blade **122** during pivoting. Further, as shown in FIG. **6****,** the drive cable **112** is wound around the grooves **402** of the first and the second pulleys **202, 204** in the transmission **118.** A multiplication factor **M** applied to the initial actuating force **F1** may be substantially equal to the number of lines **L.** Thus, the final actuating force **F2** transmitted by the second pulley **204** to the lever **128** may be **M** times the initial actuating force **F1.** In an embodiment, the number of lines **L** of the drive cable **112** may be seven. Therefore, the multiplication factor **M** may be substantially equal to 7. Consequently, the final actuating force **F2** may be substantially seven times the initial actuating force **F1.** It may be known to a person ordinarily skilled in the art that the theoretical value of the multiplication factor M may be about 7. However, due to various transmission losses, for example, due to friction, inertias of the first and second pulleys **202, 204** etc., the multiplication factor M may be lower than 7. Similarly, the theoretical value of the final cutting force **F3** transmitted by the lever **128** to the movable blade **120** may be different form a practical value due to various factors, such as an inertia of the lever **128** etc. The various details of the pulley arrangement **200** are for illustrative purposes only, and the pulley arrangement **200** may have a different number of lines **L** of the drive cable **112** without deviating from the scope of the present invention. For example, in various other embodiments (not shown), the number of lines **L** of the drive cable **112,** and hence the multiplication factor **M** may vary between 2 and 7.

An exemplary working of the tool **100** will be explained now with reference to FIG. **5****.** The spring **124** may normally bias the movable blade **120** to an open position relative to the stationary blade **122,** as shown in FIG. **5****.** A user applies an initial actuating force **F1** on the drive cable **112.** The pulley arrangement **200** applies the multiplication factor **M** on the initial actuating force **F1** to obtain the final actuating force **F2.** The lever **128** transmits the final actuating force **F2** to the curved portion **127** of the movable blade **120.** The movable blade **120** then pivots in a cutting direction **C** about the pivot point **126** against the biasing of the spring **124.** In an embodiment, the curved portion **127** of the movable blade **120** may apply an additional multiplication factor **N** to the final actuating force **F2** due to a lever mechanism about the pivot point **126.** Thus, the final cutting force **F3** exerted by the cutting edge **123** of the movable blade **120** may be about **N** times the final actuating force **F2.** In an embodiment, the additional multiplication factor **N** due to the lever mechanism may be about 2. Therefore, the final cutting force **F3** may be 14 times the initial actuating force **F1.** It may be known to a person ordinarily skilled in the art that the theoretical value of the additional multiplication factor **N** may be different from a practical value due to friction losses, inertia of the movable blade **120,** manufacturing tolerances etc. Moreover, the final cutting force **F3** may be distributed along the cutting edges **123** of the movable blade **120** in various possible manners depending on geometry of the cutting edge **123,** shape and/or location of branches etc. Similarly, a force exerted on a branch by the stationary blade **122** may also be distributed in various possible manners along the cutting edges **125** of the stationary blade **122.** On removal of the initial actuating force **F1,** the spring **124** biases the movable blade **120** to the open position in a direction opposite to the cutting direction **C** about the pivot point **126.** The working of the tool **100** may be substantially same with the implement **108** and the housing **130** angularly oriented at about **180** degrees relative to the short handle **103.**

In the exemplary embodiment of figures **1** to **6****,** the transmission **118,** including the pulley arrangement **200** and the lever **128,** is located completely in the region A between the joint **110** and the at least one movable component (the movable blade **120** in the tool **100**) of the implement **108.** The transmission **118** of the tool **100** applies the multiplication factor **M** to the initial actuating force **F1** acting on the drive cable **112.** Since any component of the transmission **118** is not located at the joint **110,** stress generated at the joint **110** may be reduced. Thus, various components (E.g., the dial **206,** the counter stopper **212** etc.) of the joint **110** may be lightweight and compact as the components have to undergo lower stress. Further, since the transmission **118** is separate from various components of the joint **110,** the joint **110** and/or the transmission **118,** including the housing **130,** may have a compact and lightweight design. Compact design of the housing **130** may increase a range of angular adjustment of the implement **108** from about 0 to 180 degrees and in addition results in the positive effect that there is no significant influence on a change of the length of the drive cable **112** during pivoting of the implement **108.**. The guide pulley **210** may further facilitate angular adjustment of the implement **108** without significantly increasing weight and/or stress at the joint **110.** Further, an operation of the tool **100** becomes easier. For example, the housing **130** having a slim profile may not interfere with a cutting operation as the housing **130** does not get tangled with branches. Therefore, overall ergonomics of the tool **100** may be improved.

In the drawings and specification, there have been disclosed preferred embodiments and examples of the invention and, although specific terms are employed, they are used in a generic and descriptive sense only and not for the purpose of limitation of the scope of the invention being set forth in the following claims.

Parts List:
- 100: Tool
- 102: Handle
- 103: Short handle
- 104: Telescopic pole
- 104A: First tube
- 104B: Second tube
- 105: Safety clasp
- 106: Locking mechanism
- 107: Knob
- 108: Implement
- 109: Coupler
- 110: Joint
- 111: Actuator
- 112: Drive Cable
- 113: Channel
- 114: Gripping member
- 115: Hole
- 116: Guiding member
- 117: First End of the Drive Cable
- 118: Transmission
- 119: Fixation Clip of the Gripping member
- 120: Movable blade
- 121: Gripping Portion of the Gripping Member
- 122: Stationary blade
- 123: Cutting edges
- 124: Spring
- 125: Cutting edges
- 126: Pivot Point
- 127: Curved Portion of the Movable Blade
- 128: Lever
- 129: Pivot point
- 130: Housing
- 131: Opening
- 132: Fastener
- 134: First Housing Part
- 136: Second Housing Part
- 137: Slot of the First Housing Part
- 138: Elongate Portion of the Stationary Blade
- 140: Apertures of the First Housing Part
- 142: Raised portion
- 200: Pulley arrangement
- 201: Pivot Axis
- 202: First pulley
- 204: Second pulley
- 205: Nut
- 206: Dial
- 208: Washer
- 210: Guide pulley
- 212: Counter stopper
- 214: Pin
- 299: Spring
- 402: Grooves of the First and Second Pulleys
- 404: Second End of the Drive Cable
- 406: Cable Connecting Portion of the Second Pulley
- 408: Lever Connecting Portion of the Second Pulley
- 410: Protruding members of the First Pulley
- 412: Pulley Apertures of the First Housing Part
- 416: First Sections of the Short Handle
- 418: Second Section of the First Housing Part
- 420: Nut
- L: Lines of the Drive Cable
- C: Cutting Direction
- F1: Initial actuating Force
- F2: Final actuating force
- F3: Final cutting force

## Claims

1. A tool **(100)** comprising:
a handle **(102)**;
an implement **(108)** comprising at least one movable component;
a joint **(110)** disposed between the implement and the handle, the joint configured to allow the implement and the handle to pivot relative to one another;
an actuator **(111)** configured to actuate the at least one movable component of the implement; and
a transmission **(118)** coupled with and located between the actuator and the at least one movable component,
- wherein components of the transmission are configured to multiply an initial actuating force **(F1)** from the actuator to obtain a final actuating force **(F2),** and wherein the transmission is further configured to transmit the final actuating force to the at least one movable component, and
- wherein the transmission **(118)** comprises a first pulley **(202)** and a second pulley **(204),** and wherein the first pulley **(202)** is located proximate to the joint and the second pulley **(204)** is located proximate to the at least one movable component of the implement,
whereas the transmission is configured such that a multiplication factor applied to the initial actuating force **(F1)** by the components of the transmission **(118)** located in a region of the tool **(100)** between but not including the joint **(110)** and the at least one movable component of the implement is greater than the multiplication factor resulting from the other components of the transmission,
whereto a housing **(130)** is formed between the joint and the at least one movable component,
- with the housing **(130)** at least partly enclosing the transmission **(118),** and
- with the housing **(130)** including a first housing part **(134)** and a **characterised in that,**
the first pulley **(202)** of the transmission **(118)** includes protruding members **(410)** that rotatable mount the first pulley **(202)** to pulley apertures **(412)** provided in the first housing part **(134),**
and wherein a lever **(128)** connects the second pulley to the at least one movable component of the implement, and wherein the lever is pivotally connected to the at least one movable component of the implement.

2. The tool according to claim 1, wherein the components of the transmission in the region between but not including the joint and the at least one movable component of the implement are configured to apply the multiplication factor that is greater than 2 and preferably 7 to the initial actuating force.

3. The tool according to claim 1, the transmission is completely located between the joint and the at least one movable component of the implement such that the increase in the actuating force is wholly generated between the joint and the at least one movable component.

4. The tool according to claim 1, wherein the joint is provided at an interface of the housing and the handle, and wherein the joint is configured to pivotally connect the housing to the handle.

5. The tool according to claim 1, wherein the implement is coupled to the housing such that the implement pivots with the housing relative to the handle.

6. The tool according to claim 1, wherein the at least one movable component is a movable blade **(120),** and wherein the implement further comprises a stationary blade **(122),** the movable blade being pivotally connected to the stationary blade.

7. The tool according to claims 1 and 6, wherein the stationary blade is fixedly coupled to the housing.

8. The tool according to claim 6 or 7, wherein the movable blade is spring actuated to an open position relative to the stationary blade.

9. The tool according to claim 8, wherein the final actuating force **(F2)** actuates the movable blade to move to a closed position relative to the stationary blade against the spring actuation.

10. The tool according to claim 1, wherein the actuator comprises a gripping member **(114)** and a drive cable **(112),** wherein the gripping member is configured to slide on the handle, and wherein the drive cable connects the gripping member to the transmission.

11. The tool according to claims 1 and 10, wherein the drive cable is wound over the first pulley and the second pulley of the transmission.

12. The tool according to any of the preceding claims is a pruning shear.

## Patentansprüche

1. Werkzeug (100), umfassend:
einen Griff (102);
ein Instrument (108) mit mindestens einer beweglichen Komponente;
ein Gelenk (110), das zwischen dem Instrument und dem Griff angeordnet ist, wobei das Gelenk eingerichtet ist, um es dem Instrument und dem Griff zu ermöglichen, sich relativ zueinander zu schwenken;
ein Bedienteil (111), das eingerichtet ist, um die mindestens eine bewegliche Komponente des Instruments zu betätigen; und
ein Getriebe (118), das mit dem Bedienteil und der mindestens einen beweglichen Komponente gekoppelt ist und zwischen diesen angeordnet ist,
- wobei Komponenten des Getriebes eingerichtet sind, um eine anfängliche Betätigungskraft (F1) von dem Bedienteil zu multiplizieren, um eine endgültige Betätigungskraft (F2) zu erhalten, und wobei das Getriebe ferner eingerichtet ist, um die endgültige Betätigungskraft auf die mindestens eine bewegliche Komponente zu übertragen, und
- wobei das Getriebe (118) eine erste Riemenscheibe (202) und eine zweite Riemenscheibe (204) umfasst, und wobei die erste Riemenscheibe (202) in der Nähe des Gelenks angeordnet ist und die zweite Riemenscheibe (204) in der Nähe der mindestens einen beweglichen Komponente des Instruments angeordnet ist,
wohingegen das Getriebe so eingerichtet ist, dass ein Multiplikationsfaktor, der auf die anfängliche Betätigungskraft (F1) durch die Komponenten des Getriebes (118) angewendet wird, die in einem Bereich des Werkzeugs (100) zwischen dem Gelenk (110), aber dieses nicht einschließend, und der mindestens einen beweglichen Komponente des Instruments angeordnet ist, größer ist als der Multiplikationsfaktor, der sich aus den anderen Komponenten des Getriebes ergibt,
wozu zwischen dem Gelenk und der mindestens einen beweglichen Komponente ein Gehäuse (130) ausgebildet ist, wobei
- das Gehäuse (130) das Getriebe (118) zumindest teilweise umschließt, und
- das Gehäuse (130) einen ersten Gehäuseteil (134) und einen zweiten Gehäuseteil (136) umfasst,
**dadurch gekennzeichnet, dass**
die erste Riemenscheibe (202) des Getriebes (118) vorstehende Elemente (410) aufweist, die die erste Riemenscheibe (202) drehbar an Riemenscheibenöffnungen (412), die in dem ersten Gehäuseteil (134) vorgesehen sind, befestigen,
und wobei ein Hebel (128) die zweite Riemenscheibe mit der mindestens einen beweglichen Komponente des Instruments verbindet, und wobei der Hebel schwenkbar mit der mindestens einen beweglichen Komponente des Instruments verbunden ist.

2. Werkzeug nach Anspruch 1, wobei die Bauteile des Getriebes in dem Bereich zwischen dem Gelenk, aber dieses nicht einschließend, und der mindestens einen beweglichen Komponente des Instruments so eingerichtet sind, dass sie einen Multiplikationsfaktor auf die anfängliche Betätigungskraft anwenden, der größer als 2 und vorzugsweise 7 ist.

3. Werkzeug nach Anspruch 1, wobei das Getriebe vollständig zwischen dem Gelenk und der mindestens einen beweglichen Komponente des Instruments angeordnet ist, derart, dass die Vergrößerung der Betätigungskraft vollständig zwischen dem Gelenk und der mindestens einen beweglichen Komponente erzeugt wird.

4. Werkzeug nach Anspruch 1, wobei das Gelenk an einer Schnittstelle des Gehäuses und des Griffs vorgesehen ist, und wobei das Gelenk so eingerichtet ist, dass es das Gehäuse schwenkbar mit dem Griff verbindet.

5. Werkzeug nach Anspruch 1, wobei das Instrument derart mit dem Gehäuse gekoppelt ist, dass das Instrument mit dem Gehäuse relativ zu dem Griff schwenkt.

6. Werkzeug nach Anspruch 1, wobei die mindestens eine bewegliche Komponente eine bewegliche Klinge (120) ist, und wobei das Instrument ferner eine unbewegliche Klinge (122) umfasst, wobei die bewegliche Klinge schwenkbar mit der unbeweglichen Klinge verbunden ist.

7. Werkzeug nach den Ansprüchen 1 und 6, wobei die unbewegliche Klinge fest mit dem Gehäuse verbunden ist.

8. Werkzeug nach Anspruch 6 oder 7, wobei die bewegliche Klinge federbetätigt ist in eine offene Position relativ zu der stationären Klinge.

9. Werkzeug nach Anspruch 8, wobei die endgültige Betätigungskraft (F2) die bewegliche Klinge betätigt, um sich gegen die Federbetätigung in eine geschlossene Position relativ zu der unbeweglichen Klinge zu bewegen.

10. Werkzeug nach Anspruch 1, wobei das Bedienteil ein Greifelement (114) und ein Antriebskabel (112) umfasst, wobei das Greifelement so eingerichtet ist, dass es auf dem Griff gleitet, und wobei das Antriebskabel das Greifelement mit dem Getriebe verbindet.

11. Werkzeug nach den Ansprüchen 1 und 10, wobei das Antriebskabel über die erste Riemenscheibe und die zweite Riemenscheibe des Getriebes gewickelt ist.

12. Werkzeug nach einem der vorhergehenden Ansprüche, das eine Astschere ist.

## Revendications

1. Un outil (100) comprenant:
une poignée (102);
an instrument (108) comprenant au moins un composant mobile;
un joint (110) disposé entre l'instrument et le poignée, le joint étant configuré pour permettre à l'instrument et la poignée de pivoter l'un par rapport à l'autre;
un actionneur (111) configuré pour actionner l'au moins un composant mobile de l'instrument; et
une transmission (118) couplée à et située entre l'actionneur et l'au moins un composant mobile,
- dans lequel composants de la transmission sont configurés pour multiplier une force d'actionnement initiale (F1) provenant de l'actionneur pour obtenir une force d'actionnement finale (F2), et dans lequel la transmission est en outre configurée pour transmettre la force d'actionnement finale à l'au moins un composant mobile, et
- dans lequel la transmission (118) comprend une première poulie (202) et une deuxième poulie (204), et dans lequel la première poulie (202) est située à proximité du joint et la deuxième poulie (204) est située à proximité d'au moins un composant mobile de l'instrument,
tandis que la transmission est configurée de sorte qu'un facteur de multiplication appliqué à la force d'actionnement initiale (F1) par les composants de la transmission (118) situés dans une région de l'outil (100) entre mais sans le joint (110) et l'au moins un composant mobile de l'instrument est supérieur au facteur de multiplication résultant des autres composants de la transmission,
dans lequel un boîtier (130) est formé entre le joint et l'au moins un composant mobile,
- avec le boîtier (130) renfermant au moins partiellement la transmission (118), et
- avec le boîtier (130) comprenant une première partie de boîtier (134) et une seconde partie de boîtier (136),
**caractérisé en ce que**,
la première poulie (202) de la transmission (118) comprend des éléments en saillie (410) qui montent de manière rotative la première poulie (202) sur ouvertures de poulie (412) prévues dans la première partie de boîtier (134),
et dans lequel un levier (128) relie la deuxième poulie à l'au moins un composant mobile de l'instrument, et dans lequel le levier est relié de manière pivotante à l'au moins un composant mobile de l'instrument.

2. L'outil selon la revendication 1, dans lequel les composants de la transmission dans la région entre mais sans inclure le joint et l'au moins un composant mobile de l'instrument sont configurés pour appliquer le facteur de multiplication supérieur à 2 et de préférence 7 à la force d'actionnement initiale.

3. L'outil selon la revendication 1, la transmission étant complètement située entre le joint et l'au moins un composant mobile de l'outil de sorte que l'augmentation de la force d'actionnement soit entièrement générée entre le joint et l'au moins un composant mobile.

4. Outil selon la revendication 1, dans lequel le joint est prévu à une interface du boîtier et de la poignée, et dans lequel le joint est configuré pour connecter de manière pivotante le boîtier à la poignée.

5. L'outil selon la revendication 1, dans lequel l'instrument est couplé au boîtier de sorte que l'instrument pivote avec le boîtier par rapport à la poignée.

6. L'outil selon la revendication 1, dans lequel l'au moins un composant mobile est une lame mobile (120), et dans lequel l'instrument comprend en outre une lame fixe (122), la lame mobile étant connectée de manière pivotante à la lame fixe.

7. L'outil selon les revendications 1 et 6, dans lequel la lame fixe est couplée de manière fixe au boîtier.

8. L'outil selon la revendication 6 ou 7, dans lequel la lame mobile est actionnée par un ressort dans une position ouverte par rapport à la lame fixe.

9. L'outil selon la revendication 8, dans lequel la force d'actionnement finale (F2) actionne la lame mobile pour se déplacer vers une position fermée par rapport à la lame fixe contre l'actionnement du ressort.

10. L'outil selon la revendication 1, dans lequel l'actionneur comprend un élément de préhension (114) et un câble d'entraînement (112), dans lequel l'élément de préhension est configuré pour coulisser sur la poignée et dans lequel le câble d'entraînement relie l'élément de préhension à la transmission.

11. L'outil selon les revendications 1 et 10, dans lequel le câble d'entraînement est enroulé sur la première poulie et la deuxième poulie de la transmission.

12. L'outil selon l'une quelconque des revendications précédentes est un cisaillement d'élagage.
